# EUROPEAN PATENT APPLICATION

(11) **EP 4 635 599 A1**
(43) Date of publication of application: **22.10.2025**
(21) Application number: 24020122.8
(22) Date of filing: 17.04.2024
(51) Int. Cl.: B01D 53/04, B01D 53/26, B01D 53/86, C01B 3/00

(54) **METHOD AND APPARATUS FOR PRODUCTION OF HYDROGEN**

(71) Applicant: Linde GmbH, 82049 Pullach (DE)
(72) Inventor: Winkler, Florian, 82049 Pullach (DE); Duarte, Gabriel Salazar, 82049 Pullach (DE)
(74) Representative: Lu, Jing

(57) **Abstract**

An method (100-600) for producing hydrogen is proposed, comprising providing a first gas (1) containing hydrogen, oxygen and water, said providing the first gas (1) comprising an electrolytic conversion of water; providing a second gas (5) containing hydrogen, oxygen and water, said providing the second gas (5) comprising a condensative removal of water from the first gas (1) or a part thereof; and providing a third gas (10) containing hydrogen, said providing the third gas (10) comprising an adsorptive removal of water and a catalytic removal of oxygen from the second gas (5) or a part thereof using a adsorptive and catalytic treatment arrangement (110) comprising treatment vessels (A, B), wherein each of the treatment vessels (A, B) comprises, in a first direction from a first opening to a second opening, a first adsorption layer (211), a catalytic layer (212) and a second adsorption layer (213), wherein each of the treatment vessels (A, B) is alternatingly operated in a treatment mode and a regeneration mode, wherein, in the treatment mode, the second gas (5) or a part thereof is passed in the first direction through the treatment vessels (A, B), wherein, in the treatment mode, the first adsorption layer (211) and the second adsorption layer (213) are used for said adsorptive removal of water and the catalytic layer (212) is used for said catalytic removal of oxygen, wherein, in the regeneration mode, the treatment vessels (A, B) are heated using a heating gas (5a, 10a) which is formed from a part of the second gas (5) or the third gas (10), is heated, and is passed through the treatment vessels (A, B). A corresponding apparatus is also provided.

## Description

The present disclosure relates to methods and apparatus producing hydrogen on the basis of electrolysis of water.

### Field

The production of hydrogen using electrolysis of water may require a downstream removal of oxygen and moisture. The moisture includes residual moisture carried over from the electrolysis feed and water that is be produced during the removal of oxygen. The removal of oxygen is typically performed by catalytically converting oxygen to hydrogen and water, commonly referred to as DeOxo in the field.

There is a desire for improvements in catalytically producing hydrogen.

### Summary

Herein, methods and apparatus including the features of the independent claims are proposed. Embodiments thereof are the subject of the independent claims and of the description that follows hereinbelow.

The method for producing hydrogen as proposed herein comprises providing a first gas containing hydrogen, oxygen and water, said providing the first gas comprising an electrolytic conversion of water; providing a second gas containing hydrogen, oxygen and water, said providing the second gas comprising a condensative removal of water from the first gas or a part thereof; and providing a third gas containing hydrogen, said providing the third gas comprising an adsorptive removal of water and a catalytic removal of oxygen from the second gas or a part thereof using a adsorptive and catalytic treatment arrangement comprising treatment vessels.

In the proposed method, each of the treatment vessels comprises, in a first direction from a first opening to a second opening, a first adsorption layer, a catalytic layer and a second adsorption layer, wherein each of the treatment vessels is alternatingly operated in a treatment mode and a regeneration mode, such that in particular at each point of time at least one of the treatment vessels is operated in the treatment mode. In the treatment mode, the second gas or a part thereof is passed in the first direction through the treatment vessels, wherein, in the treatment mode, the first adsorption layer and the second adsorption layer are used for said adsorptive removal of water and the catalytic layer is used for said catalytic removal of oxygen. In the regeneration mode, the treatment vessels are heated using a heating gas which is formed from a part of the second gas or the third gas, which is heated, and which is passed through the treatment vessels. Said passing the heating gas through the treatment vessels may be performed in the first direction or in a second direction opposite to the first direction, depending on the specific regeneration mode and the source of the heating gas, as explained below.

With the method as proposed herein, an individual catalytic reactor for removing oxygen can be dispensed of, and therefore operation and installation costs as well as process complexity can be reduced. In addition, space demand is reduced significantly. Moreover, a more efficient operation is possible as no pre-heating is required as would be the case for an individual catalytic reactor. There is no need of a blower for regeneration as the "saved" pressure loss from the catalytic reactor can be used for feed gas regeneration. This reduces in addition maintenance of rotating equipment which may be replaced, e.g., by simple valve positioners. According to the method as proposed herein, an oxygen removal efficiency may be increased as an oxygen removal is possible even in a regeneration mode. Due to the almost dry conditions at the catalyst, a more efficient oxygen removal is possible as well. As further explained below in more detail, less water contaminated by catalyst particles is produced in the proposed method. The method as proposed herein allows for a compact design and therefore containerized solutions or skid solutions for bigger plants.

According to certain embodiments as proposed herein, the first adsorption layer may have a volume corresponding to 50 to 80 vol-% of a total volume of the first adsorption layer, the catalytic layer and the second adsorption layer, the catalytic layer may have a volume corresponding to 5 to 10 vol-% of said volume, and the second adsorption layer may have a volume corresponding to 10 to 40 vol-% of said total volume.

According to certain embodiments as proposed herein, the first gas contains hydrogen in a first hydrogen content, water in a first water content, and oxygen in a first oxygen content, the second gas contains hydrogen in a second hydrogen content, water in a second water content, and oxygen in a second oxygen content, and the third gas contains hydrogen in a third hydrogen content. The first, second and third hydrogen contents are increasing from the first to the third gas, while a bulk water removal by condensation is performed from the first to the second gas and a remainder is adsorptively removed, before the catalytic removal of oxygen, thereafter. This allows for an advantageous operation as already discussed above.

According to certain embodiments as proposed herein, the first water content is a water content above a saturation content, the second water content is a water content corresponding to a saturation content, and the third water content is from 0 to 50 or from 0 to 5 parts by million on a volume basis, and/or the first oxygen content is from 50 to 1000 parts by million on a volume basis, the second oxygen content is from 50 to 1000 parts by million on a volume basis, and the third oxygen content is from 0 to 5 parts by million on a volume basis. Embodiments as proposed herein allow for a third gas, which may be a hydrogen product, comprising particularly low contents of water and oxygen using a reduced effort under more efficient conditions.

According to certain embodiments as proposed herein, the first gas is provided at an absolute pressure of 10 to 40 bar and at a temperature of 50 to 70 °C, the second gas is provided at an absolute pressure of 10 to 40 bar and at a temperature of 5 to 60 or 10 to 50 °C, and the third gas is provided at an absolute pressure of 10 to 40 bar and at a temperature of 5 or 10 to 70 °C. This means that no considerable pressure drops are present. The gas temperatures and pressures may, in certain embodiments, be selected such that the gas in the adsorptive and catalytic treatment arrangement is well above a condensation temperature, e.g. more than 10 K and up to 20 K above the dew point. In other configurations, the gas entering the catalytic treatment arrangement can be saturated. In the latter case, the stream will be saturated at the temperature of the cooler and condenser upstream of the adsorber and there is no need to overheat the feedstream to the adsorber

According to certain embodiments as proposed herein, the part of the second gas or the third gas from which the heating gas is formed is a proportion of 5 to 60% by volume of the second gas or the third gas. This allows for an advantageous operation as already discussed above and further explained below.

According to certain embodiments as proposed herein, in the regeneration mode, and subsequent to the treatment vessels being heated, the treatment vessels are cooled using a cooling gas which is formed from a part of the second gas or the third gas and which is passed through the treatment vessels. This operation mode serves to precondition the treatment vessels for a subsequent treatment mode. In other embodiments, a dedicated cooling mode may also be omitted and cooling may be realized in a first phase of the subsequent treatment mode.

According to certain embodiments as proposed herein, the part of the second gas or the third gas from which the cooling gas is formed is a proportion of 5 to 60% by volume of the second gas or the third gas.

According to certain embodiments as proposed herein, the cooling gas stream is passed through the treatment vessels in the first direction, such that a cooling time may be significantly reduced. Said passing the cooling gas through the treatment vessels may, however, be also be performed in the second direction.

According to certain embodiments as proposed herein, the first adsorption layer is used for the adsorptive removal of at least a part of the water contained in the second gas upstream of the catalytic layer and the second adsorption layer is used for the adsorptive removal of at least a part of the water formed from oxygen in the catalytic layer. This enables for operating the catalytic layer at almost dry conditions in which catalyst activity is improved.

According to certain embodiments as proposed herein, the regeneration gas or a part thereof is subjected to the condensative removal of water to which the first gas or the part thereof is subjected, or to a separate condensative removal of water, and is thereafter returned to the adsorptive removal of water and the catalytic removal of oxygen to which the second gas or the part thereof is subjected. In other words, water desorbed in the regeneration mode may be largely removed before the regeneration gas reenters the treatment unit.

According to certain embodiments as proposed herein, the condensative removal of water to which the first gas or the part thereof is subjected and/or the separate condensative removal of water to which the regeneration gas or the part thereof is subjected includes a cooling step and a phase separation.

According to certain embodiments as proposed herein, the electrolytic conversion of water is performed as, or includes, a low-temperature electrolysis or a high-temperature electrolysis. Embodiments as proposed herein may be used with all typical electrolysis processes known in the field of water electrolysis.

An apparatus for producing hydrogen as proposed herein comprises an electrolysis unit configured for providing a first gas containing hydrogen, oxygen and water including an electrolytic conversion of water; a condensation arrangement configured for providing a second gas containing hydrogen, oxygen and water including a condensative removal of water from the first gas or a part thereof; and an adsorptive and catalytic treatment arrangement comprising treatment vessels configured for providing a third gas containing hydrogen including an adsorptive removal of water and a catalytic removal of oxygen from the second gas or a part thereof.

In the apparatus proposed herein, each of the treatment vessels comprises, in a first direction from a first opening to a second opening, a first adsorption layer, a catalytic layer and a second adsorption layer, wherein each of the treatment vessels is configured to be alternatingly operated in a treatment mode and a regeneration mode, wherein, in the treatment mode, the second gas or a part thereof is passed in the first direction through the treatment vessels, wherein, in the treatment mode, the first adsorption layer and the second adsorption layer are used for said adsorptive removal of water and the catalytic layer is used for said catalytic removal of oxygen, wherein, in the regeneration mode, the treatment vessels are heated using a heating gas formed from a part of the second gas or the third gas, which is heated, and which is passed through the treatment vessels.

As to further details and advantages of such an apparatus, reference is made to the explanations above in regarding the method proposed herein and its embodiments. Particularly, such an apparatus may, in embodiments as proposed herein, comprise means adapted to perform a method according to any of the embodiments as discussed herein.

### Figures

Embodiments as disclosed herein will now be described, by way of example only, with reference to accompanying drawings, in which
Figure 1 illustrates a method not forming part of the invention;
Figure 2 illustrates a layer arrangement according to an embodiment;
Figures 3A and 3B illustrate experimental results; and
Figures 4 to 9 illustrate embodiments as proposed herein.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future, particularly when encompassed by the scope of the independent claims.

For details regarding water electrolysis processes, to which the present disclosure pertains, reference is made to expert literature such as the article "Hydrogen" in Ullmann's Encyclopedia of Industrial Chemistry, Wiley-VCH, 15 June 2000, DOI: 10.1002/14356007.a13_297, in particular section 4.2, "Electrolysis".

In classical water electrolysis, an aqueous alkaline solution, typically of potassium hydroxide, is used as the electrolyte (AEL, alkaline electrolysis). Alkaline electrolysis may be carried out with a unipolar or bipolar electrode arrangement and at atmospheric pressure or, on an industrial scale, significantly higher. Higher pressures may be used in particular to avoid subsequent compression.

More recent developments in water electrolysis include the use of proton-conducting ion exchange membranes (SPE, solid polymer electrolysis; PEM, proton exchange membranes), in which the water to be electrolysed is provided on the anode side. Electrolysis technologies using an anion exchange membrane (AEM) are also used. The electrolysis processes mentioned so far are low-temperature processes in which the water to be electrolysed is present in the liquid phase. In addition, so-called vapour electrolysis may be used, which can also be carried out using alkaline electrolytes and adapted membranes, for example polysulfone membranes, as well as using solid oxide electrolysis cells (SOEC). The latter include, in particular, doped zirconium dioxide or oxides of other rare earths.

The term electrolysis as used herein is intended to cover all of these processes in the following. In particular, low-temperature electrolysis (PEM, AEL, AEM) is suitable for flexible operation that supports the energy transition to renewable energies. All processes can be used in embodiments as disclosed herein.

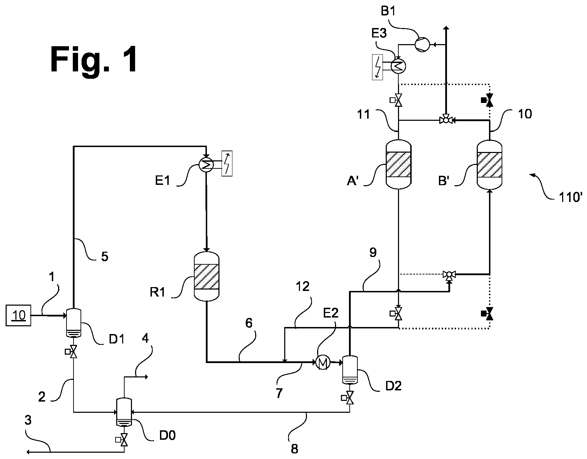

In Figure 1, an apparatus and method for producing hydrogen on the basis of water electrolysis not forming part of the present invention is schematically illustrated. An electrolysis unit is indicated with a block 10 for reasons of generality.

From electrolysis unit 10, a cathode stream comprising hydrogen and certain proportions of water and oxygen is withdrawn, which is referred to as "first gas" 1 herein. First gas 1 is, in the embodiment illustrated, injected into a first knockout vessel D1 wherein a liquid phase and a gaseous phase are separated from each other. A liquid stream 2 withdrawn from first knockout vessel D1 is expanded into a second knockout vessel D0, where gases still dissolved in the liquid phase from first knockout vessel D1 are removed by outgassing. A liquid phase in second knockout vessel D0 is withdrawn therefrom as a liquid stream 3 and may be returned to a position upstream of electrolysis unit 10, as not shown in detail for reasons of conciseness. A gaseous phase formed in second knockout vessel D0 may be withdrawn therefrom as a gaseous stream 4 and put to a different use as appropriate.

A gaseous phase formed in first knockout vessel D1 is withdrawn therefrom as a gaseous stream 5, heated in an electric heating unit E1, and passed through a catalytic unit R1 wherein oxygen is reacted to hydrogen and water, forming an oxygen-depleted gaseous hydrogen stream 6 containing a certain amount of water. Stream 6 is combined with a stream 12 which may be formed as explained below, producing a combined stream 7. To remove the water, stream 7 is cooled in a heat exchanger E2 using cooling water and thereafter supplied to a third knockout vessel D2, in which a liquid phase and a gaseous phase are separated from each other. A liquid stream 8 withdrawn from third knockout vessel D2 may be used as explained above. The gaseous phase formed in third knockout vessel D2 may be withdrawn from the third knockout vessel D2 as a gaseous stream 9.

In the method illustrated in Figure 1, an adsorptive drying unit 110' comprising adsorption vessels A' and B' is used, which is shown in Figure 1 in an operation mode in which gaseous stream 9 is passed through vessel B', forming a dried stream 10, while vessel A' is regenerated using a regeneration gas stream 11. Regeneration gas stream 11 is formed, in the example shown, using a partial stream of dried stream 10 which is compressed using a blower B1 and thereafter heated or cooled in a temperature conditioning unit E3. After having been passed through vessel A', a water-loaden regeneration gas stream 12 may be returned as mentioned above. A remainder of dried stream 10 may pe provided as, or further treated to provide, a hydrogen product not separately referenced. In a subsequent mode of operation, vessels A' and B' may be switched such that stream 9 is supplied to vessel A' while vessel B' is regenerated with regeneration gas stream 11. Blower B1 can be positioned at the location shown, but it can also be positioned downstream of the vessel A' (and B' in the subsequent mode of operation just mentioned).

That is, in the method illustrated in Figure 1, a "DeOxo" unit in the form of catalytic unit R1 is used to remove the oxygen and an adsorptive drying unit 110' which is arranged downstream of the DeOxo unit is used for drying. To efficiently run the DeOxo unit, i.e., catalytic unit R1, the current state-of-the-art requires at least pre-heaters to avoid water condensation, such as shown in Figure 1 with heater E1, and/or high temperature and thus energy. In addition, due to the still relatively high water content, the gaseous stream 5 to the catalytic unit R1, high catalyst amounts for deoxidizing are needed to overcome catalytic inhibition by water partial pressure. Also a blower B1 is required to route the regeneration gas stream 11 via gas stream 12 back to stream 7, overcoming any pressure drops caused by the elements shown.

Typical operating conditions of the catalytic unit R1 include a feed temperature of at least 20 K above the dew point, and a gas hourly space velocity (GHSV) of 10,000 h⁻¹ to 50,000 h⁻¹ at 20 to 30 bara. Table 1 below lists typical parameters of stream 5 upstream and downstream (us/ds) of heater E1, and of streams 9 and 10. Oxygen and water contents are given in vppm (parts per million by volume).

**Table 1**

| **Parameter** | **Unit** | **5 (us)** | **5 (ds)** | **9** | **10** |
|---|---|---|---|---|---|
| Pressure | bar (abs.) | 10-40 | 10-40 | 10-40 | 10-40 |
| Temperature | °C | 50-70 | 60-90 | 10-50 | 10-50 |
| Oxygen content | vppm | 5-1000 | 50-1000 | 50-1000 | < 5 |
| Water content | vppm | > saturated | saturated | saturated | < 5 |

Several problems may arise in an arrangement shown in Figure 1.

A first problem is that water from stream 1 must be knocked out in first knock-out vessel D1 at a relatively high pressure, and thereafter stream 5 must be heated in heater E1 for deOxo reactor or catalytic unit R1 before it is afterwards cooled again in cooler E2. The reason is that water has to be condensed and separated in third knock-out vessel D2 for efficient dewatering in adsorptive drying unit 110. This is energy intensive, and the energy is lost at least in part.

A second problem is that the water separated in third knock-out vessel D2, i.e. stream 8, may be contaminated with fine catalyst particles consisting of alumina or other oxides such as silicon dioxide from catalytic unit R1 or from the vessel A' or B' which is presently in regeneration. These particles can damage membranes used in electrolysis unit 10. Such water must therefore be purified for use as electrolysis make-up water or rejected. This is additional effort or loss of resources.

A third problem is that multiple vessels (reactors, separators, adsorbent beds) are required which is reflected in high capital costs and space demand. Especially for containerized solutions, more compact systems are required.

A fourth problem is that stream 5 to heater E1 is saturated with water and may contain, e.g. if electrolysis unit 10 is operated with proton exchange membranes, 100 to 1000 vppm of oxygen. The high water content may cause additional catalyst demand for catalytic reactor R1 due to catalytic inhibition of the catalytic oxidation by water vapour.

A fifth problem is that the two-step process (deOxo followed by adsorptive drying) is generating pressure losses.. For this reason, a blower B1 as shown may be needed, as mentioned, as well as higher adsorber capacities due to increased flows, generating additional capital and operating expenses and space demand as well as increasing system complexity.

To overcome these problems, instrumentalities as disclosed herein include integrating an oxygen removal and drying in the form of different layers in the same adsorption vessels, which are therefore referred to as "treatment vessels" A, B, and, in the language used herein, are part of a "(adsorptive and catalytic) treatment arrangement" 110. Such an approach saves capital expenses and increases efficiency. Aspects as disclosed relate to a regeneration system for the combined units proposed.

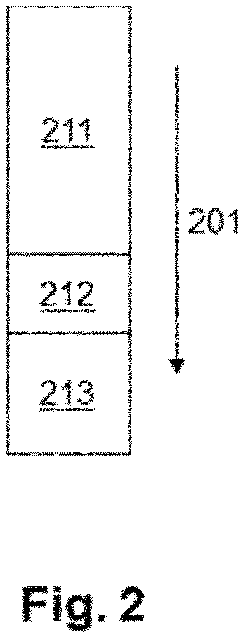

In Figure 2, a layer arrangement in a treatment vessel A, B as proposed in embodiments herein is illustrated in a schematic view 210. A flow direction of a stream to be treated using this layer arrangement is indicated by an arrow 201.

At the inlet side of the layer arrangement 210, a first adsorbent layer 211 is provided which is configured to remove water efficiently. First adsorbent layer 211 may comprise materials such as silica gel, activated alumina, molecular sieves, metal-organic frameworks, alumina-molecuar sieve composites or any combination of such adsorbents. The main function of this first adsorbent layer 211 is to dry the gas before it enters the catalyst layer 212 and as such to increase the efficiency of the catalyst. The catalyst layer 212 is placed downstream of first adsorbent layer 211. For converting oxygen, catalysts such as alumina spheres impregnated with 0.1 wt% up to 0,3 wt% precious metal such like palladium, platinum or a mix of both can be used in the catalyst layer 212. Also non-metallic catalysts can be used, e.g. nickel based catalyst, which may even be provided in the form of hydration catalysts.

Since water is produced during the catalytic conversion in catalyst layer 212, it is necessary to have a second adsorbent layer 213 to remove the produced water downstream of the catalyst layer 212. Examples are: silica gel, activated alumina, molecular sieves, metal-organic frameworks, alumina-molecuar sieve composites or any combination of such adsorbents, being the same or different as in first adsorbent layer 211 discussed above.

It could be demonstrated that in such arrangement 210 the adsorbent layers 211 and 213 removes water from a feed to the arrangement 210 and from the deOxo reaction, and in addition the catalysts used in catalyst layer 212 work highly efficient even at lower temperatures which are required for efficient dehydration beds. Oxygen concentrations obtained were below the detection limit (i.e. lower than 0.1 vppm) and water concentrations below 0.1, 0.5, 1, 2 or 5 ppm for 6 hours.

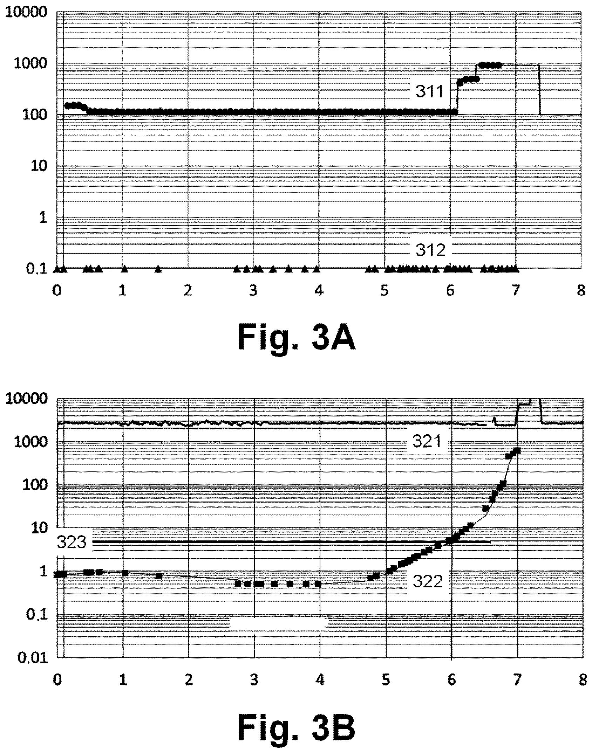

Figures 3A and 3B illustrate results of an experiment performed using layer arrangement 210 shown in Figure 2, with 100ml of dehydration bed or catalyst layer 211, 10 ml catalytic layer 212 and 22 ml dehydration bed or catalyst layer 213 wherein a time on service in hours is illustrated in the horizontal axis and an oxygen content (Figure 3A) and a water content (Figure 3B) in vppm is illustrated on the vertical axis. An oxygen content as calculated (solid line) and measured (individual points) in the feed is indicated with 311, and an oxygen content measured in the effluent is indicated with 312 in Figure 3A. A water content in the feed is indicated with 321, and a water content measured in the effluent is indicated with 322 in Figure 3B. A specification is illustrated with a line 323 in Figure 3B.

Under expected operation conditions (30 bar absolute pressure, 40 °C) the combined process reached specified hydrogen purities (in a time window until 6 hours). An increase of an oxygen feed concentration to 1000 vppm or a total feed increase to 1200 l/h or even a pressure reduction down to 2.5 bar (abs.) could not cause detectable amounts of oxygen in the setup shown. This underlines the high activity of such catalytic zone within dehydration beds.

When an experiment of which the results are shown in Figures 3A and 3B was executed until the second adsorbent layer 213 downstream of the catalytic layer 212 was exhausted and the first adsorbent layer 211 upstream thereof started to be exhausted. It could be demonstrated that even at moisture levels of 400 to 1000 ppm the oxygen was below detection limit of 0.1 ppm. Expected moisture from catalytic layer were 200 vppm. Consequently, the excessively low moisture contents at the entry were surprisingly not needed, and a maximum requirement could be defined, such as a distance to the dew point of water of up to 20 K above needed. This further optimizes the size of dehydration bed 211.

In Table 2 below, characteristic parameters used or obtained when a catalytic layer 212 is operated at not completely dry conditions are indicated for two cases. The "feed gas" is the gas supplied to the layer arrangement.

**Table 2**

| **Parameter** | **Unit** | **Case 1** | **Case 2** |
|---|---|---|---|
| Time on stream | h | 19 | 21-22 |
| Pressure | Bar (abs.) | 32 | 32 |
| Temperature | °C | 40 | 40 |
| Total flow | Nl/h | 738 | 738 |
| Oxygen in feedgas | vppm | 100 | 100 |
| Oxygen at outlet | vppm | < 0,1 | <0,1 |
| Moisture at outlet | vppm | 400 | 800-1000 |
| Moisture at catalytic layer entry | vppm | 200 | 600-800 |
| Distance to dew point at catalytic layer entry | K | 25-30 | 20-25 |

For the described function of the catalyst in catalytic bed 212, the first adsorbent layer 211 is designed to protect the catalyst from water condensation (at least 0-20 K above dew point). The ratio of product gas flow in standard or normal cubic meters per hour to the catalytic volume in cubic meters is at least 74,000 h⁻¹ and up to 150,000 h⁻¹. The layer height is preferably not be less than 5 cm for technical application to avoid gas by-passes through the layer by inaccurate filling. The second adsorbent layer 213 layer downstream of the catalytic layer 212 is designed to adsorb the formed water during catalytic oxidation. The water removal capacity should allow an adsorption period equal to the adsorption period for adsorbent layer 211 of more than 3-12 hours.

Since adsorption is a discontinuous process, it is necessary to have at least two absorber vessels A', B', such as shown in Figure 1, and correspondingly two treatment vessels A, B, to produce continuously a product stream such as gas stream 10 continously. For this and all following arrangements, the direction of flows is not fixed in aspects of embodiments disclosed herein.

As generally known, regenerating adsorption vessels A', B' such as shown in Figure 1 include passing a heated gas through the adsorption vessels A', B', in order to desorb the components from the adsorption material or adsorbent. To prepare the adsorption vessels A', B' for use in a subsequent adsorption mode, subsequently a cooling mode is performed. In more general language, for each adsorption vessel A', B' an adsorption mode performed during an adsorption period is followed by a regeneration mode performed during a regeneration period, the regeneration mode including a desorption or heating mode performed during a desorption or heating (sub)period and a cooling mode performed during a cooling (sub)period. The desorption or heating subperiod and the cooling subperiod may be considered to be subperiods of the regeneration mode, in the language used herein. However, in a different viewpoint, the cooling mode may be considered not being part of the regeneration mode in its strict sense, but a separate operation mode, such that a cooling period would not form part of the regeneration mode. The invention is not limited by the language usage.

Hereinbelow, reference is made to a "heating gas" which is used in the desorption or heating mode, and to a "cooling gas" which is used in the cooling mode. Furthermore, hereinbelow the term "treatment mode" is used instead of "adsorption mode" as this also includes catalytic conversion.

A characteristic of embodiments disclosed herein may that the cooling gas is passed through the adsorption vessels A', B' in the same direction as the adsorption flow in the subsequent adsorption mode. While three-way valves are shown hereinbelow, this is done rather for the sake of simplicity, but embodiments as disclosed herein are not limited to the use of valves of a certain type. Different headers consisting of different valves can be used, as long as the desired flow directions and steps can be completed. Even blowers can be used to generate the needed pressure differences.

A combination of catalytic conversion and adsorptive drying as proposed herein already realizes benefits over any state-of-the-art purification regarding saving capital cost but it also enables a compact process design.

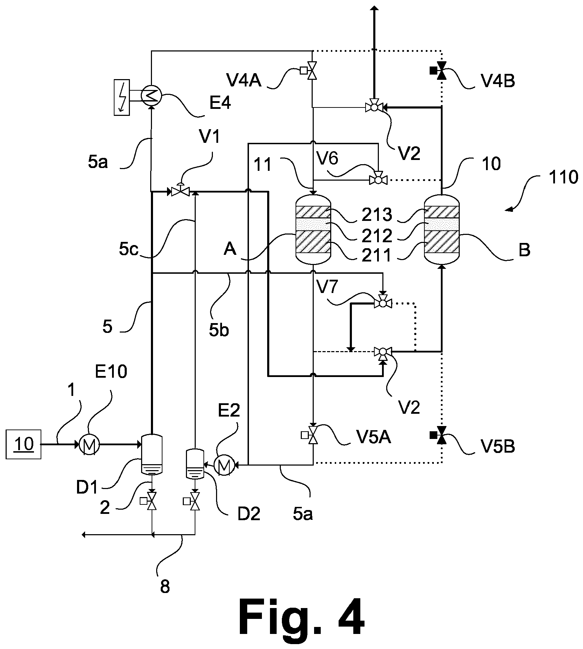

Figure 4 illustrates a method and apparatus for producing hydrogen according to an embodiment as proposed herein and generally referred to with 100.

As shown in Figure 4, a cathode stream 1 from the cathode side of an electrolysis unit, which may correspond to cathode stream shown in Figure 1 and which is a "first gas" 1 in the language used herein, is withdrawn from electrolysis unit 10, is cooled in a cooler E10 upstream of first knockout vessel D1. The liquid phase in first knockout vessel D1 may, as above, be sent as a liquid stream 2 to a second knockout vessel D0 as illustrated in Figure 1, but not shown in Figure 4 for reasons of conciseness. The gas phase from first knockout vessel D1 is withdrawn therefrom as a gaseous stream which is referred to as a "second gas" 5 herein, a part of which, still referred to with 5, being passed on to treatment vessel B operated in an adsorption mode.

In treatment vessels A and B, a catalytic layer 212 is, as discussed in connection with Figure 2, arranged between a first adsorption layer 211 and a second adsorption layer 213. Therefore, a dried stream depleted in oxygen corresponding to stream 10 of Figure 1 can be provided in the adsorption mode of adsorption vessel B, stream 10 being referred to as "third gas" 10 herein. Valves V2 and V3 serve for switching between the vessels A and B for adsorption.

In a heating or desorption mode, a partial stream of second gas 5, referred to as heating gas 5a herein, is heated in heater E4 before being passed, as controlled by valves V4A and V5A in case of vessel A (or valves V4B and V5B in case of vessel B), in an opposite direction as compared to second gas 5 in the adsorption mode, through the adsorption vessel A, as shown in Figure 4. Thereafter, water-loaden heating gas 5a is cooled in heat exchanger E2 before water is knocked out therefrom in third knockout vessel D2. A remaining gas phase is returned as a stream 5c to be reunited with stream 5, while stream 8 may be united with stream 2. The desorption gas can, in the embodiment shown in Figure 4, be cooled in smaller equipment than the case for third knockout vessel D2 and heat exchanger E2 provided according to Figure 1. While Figure 4 illustrates passing the heating gas 5a through the vessels in a certain direction, also the opposite direction may be used in other alternatives.

In a cooling mode, a partial stream of second gas 5, referred to as cooling gas 5b herein, is withdrawn upstream of heater E4 before being passed, as controlled by valves V7 and V6, in the same direction as stream 5 in the adsorption mode, through the adsorption vessel A. Thereafter, cooling gas 5b is passed through heat exchanger E2 and third knockout vessel D2, and as in the heating or desorption mode, stream 5c is reunited with stream 5. Water may be knocked out in third knockout vessel D2.

Regeneration gas for cooling or heating, i.e. heating gas 5a and cooling gas 5b, can be withdrawn from stream 5 downstream of first knockout vessel D1 and upstream from the combined treatment arrangement 110, as shown in Figure 4, but also, as not shown in Figure 4, from purified hydrogen 10 downstream the treatment arrangement 110. To guarantee a closed loop regeneration scheme to not loose any product, blowers and/or pressure reducing valves can be used.

An amount of 5% to 60% of second gas 5 may be used as the heating gas 5a. The regeneration gas 5a may be heated, in heater E4, to a desorption temperature of 70 to 300 °C. Similarly, an amount of 5% to 60% of the second gas 5 may be used as the cooling gas 5b. As, in case cooling gas stream 5b is formed as a part of gas stream 5, it contains moisture it is necessary to have the gas flow in adsorption direction. Any condensable moisture may be removed as shown before reuniting the gas stream 5c with the fraction downstream of valve V1

During the adsorption mode of vessel B, in the example shown in Figure 4, the moisture of the gas stream 5 is removed in the first adsorption layer 211. In addition, the contained oxygen is converted catalytically into water in the catalytic layer 212 and thus removed from stream 5. The water that is produced during the conversion is removed in the second adsorption layer 213. A content of less than 5ppmv oxygen and less than 50 ppmv of water, particularly less than 5 ppmv of water, in the final hydrogen product or stream 10 is targeted for.

During the regeneration step the trapped moisture in the vessels A, B is released and the contained oxygen in the regeneration gas stream 5a may be converted catalytically into water, causing additional efficiency of the overall oxygen removal. In case the oxidizing catalyst had suffered from moisture saturation, the catalyst may simultaneously be regenerated during regeneration.

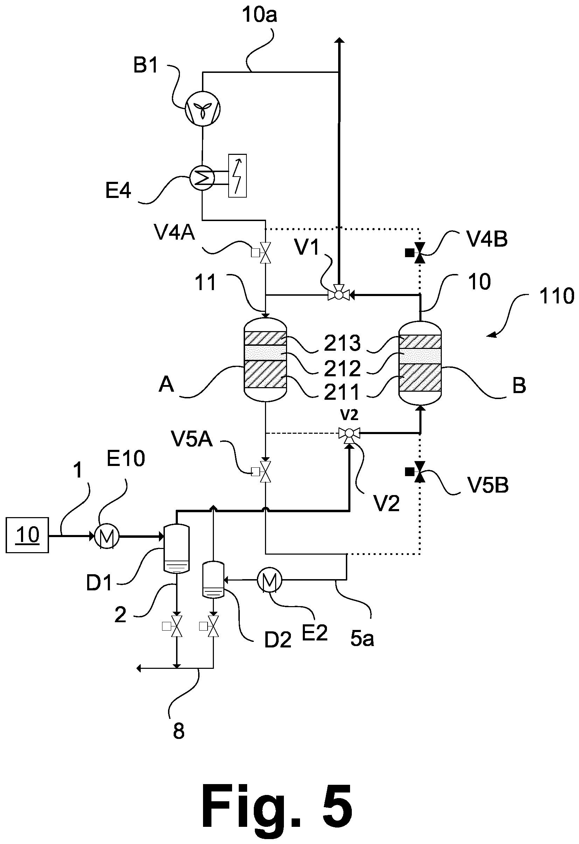

Figure 5 illustrates a method and apparatus for producing hydrogen according to an embodiment as proposed herein and generally referred to with 200.

In contrast to the embodiment shown in Figure 4, a partial stream 10a of the dried gas stream 10 is used for regeneration. In a second arrangement the regeneration gas is the product gas. 5% to 60% of stream 10 may be routed for regeneration via blower B1 to heater E4 to heat the regeneration gas to a desorption temperature of 70 to 300°C. The hot regeneration gas stream is sent, essentially as already discussed in connection with Figure 4, against the adsorption direction to the adsorber A in regeneration mode. Regeneration gas stream 10a is thereafter, as shown for stream 5a in Figure 4, cooled down by the heat exchanger E2 and the water is knocked out in third knockout vessel D2 before the regeneration gas stream 10a is re-united with stream 5 downstream first knockout vessel D1 and upstream the adsorption unit 110 and the mix is sent to the adsorption vessel B in adsorption mode. The position of the blower B1 does not necessarily influence the process. The blower B1 can be placed upstream of the heater E4 or even downstream of heater E4 or downstream of knock out vessel D2. The importance is that the blower B1 compensates for the pressure losses in order to be mixed again with the feed

After regeneration, it is likewise necessary in this arrangement to cool down the bed or layers 211, 212, 213, before it can go to the adsorption step again. For this purpose, heater E4 is bypassed or switched off (not shown) and the cooling gas is sent the same way as the desorption gas 10a to the vessel B in regeneration mode, routed to the cooler E2 and separator D2, and reunited with stream 5.

In this, and certain embodiments below, a blower is not needed and the pressure drop "saved" in the deOxo can be used in the pressure reducing valve during the feed regeneration. An additional advantage as is that the vessel diamater does not have to be increased since the load to the adsorbers remains the same in comparison to a product regeneration where the load increases by the amount of the regeneration gas.

A problem solved in this and certain other embodiments is that, as the DeOxo layer is included in the vessels A and B, an almost dry feed with at most 100 ppmv water at the inlet is not required. Therefore, almost complete removal of water in an upstream adsorbent unit is not required.

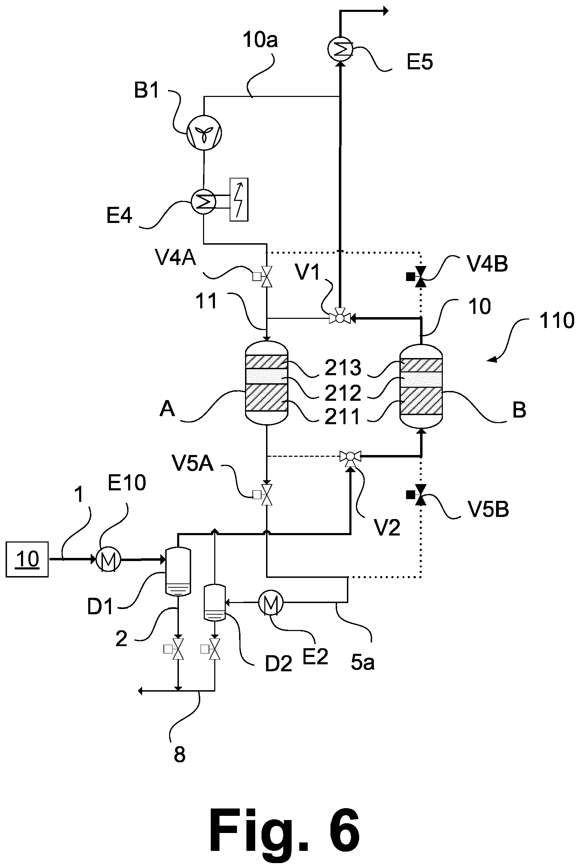

Figure 6 illustrates a method and apparatus for producing hydrogen according to an embodiment as proposed herein and generally referred to with 300.

In contrast to the embodiments discussed before, a cooling mode is not performed. The heating mode is almost performed for the same time as the adsorption step. This means that the cooling mode that is commonly used before the heated adsorber vessel goes into adsorption is omitted. Therefore, the heat that is stored after the heating step is pushed out of the bed during the adsorption step. Since at the beginning of the adsorption step a heat peak would be caused, a cooler E5 for the treated gas 10 or hydrogen product is used.

The treated gas exiting the adsorber that is currently in the adsorption step (in this example adsorber B) is cooled down by using E5. The adsorber itself is cooled down after heating step during the adsorption step. The fact that the cooling step can be omitted leads to a reduction in peak power values and the heater E4 can run more smothly.

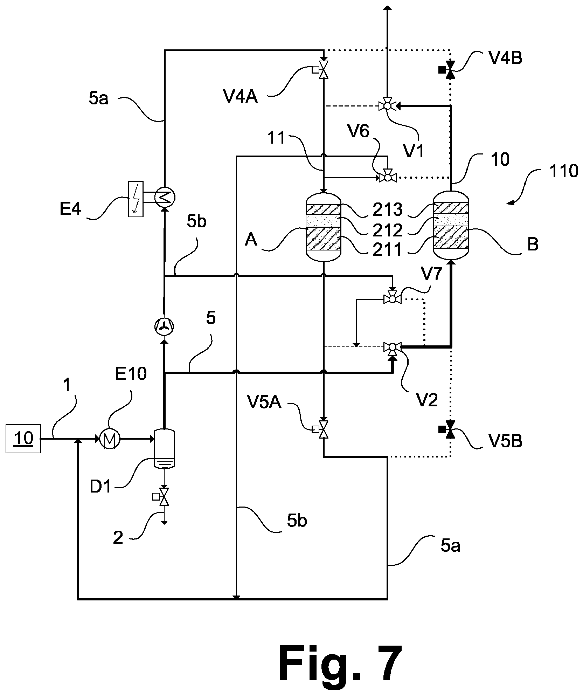

Figure 7 illustrates a method and apparatus for producing hydrogen according to an embodiment as proposed herein and generally referred to with 400.

In the embodiment shown in Figure 7, cathode stream 1 from the electrolysis unit 10 is cooled in heat exchanger E10 and water is separated in first knockout vessel D1. Stream 5 is routed to the adsorber vessel B in the adsorption mode. Regeneration gas 5a for heating and 5b for cooling the adsorber vessel A in regeneration mode can also be sent to heat exchanger E10 and knockout vessel D1, saving separate coolers and a separator (D2, E2 as shown before) for these gas streams. The regeneration gas and cooling gas can be taken from stream 5 or stream 10. For the purpose already explained above, a blower B1 can be used.

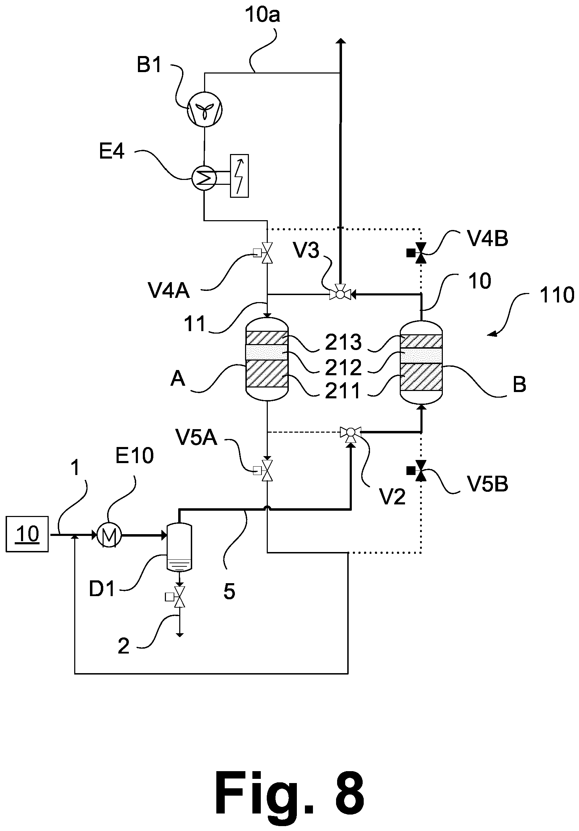

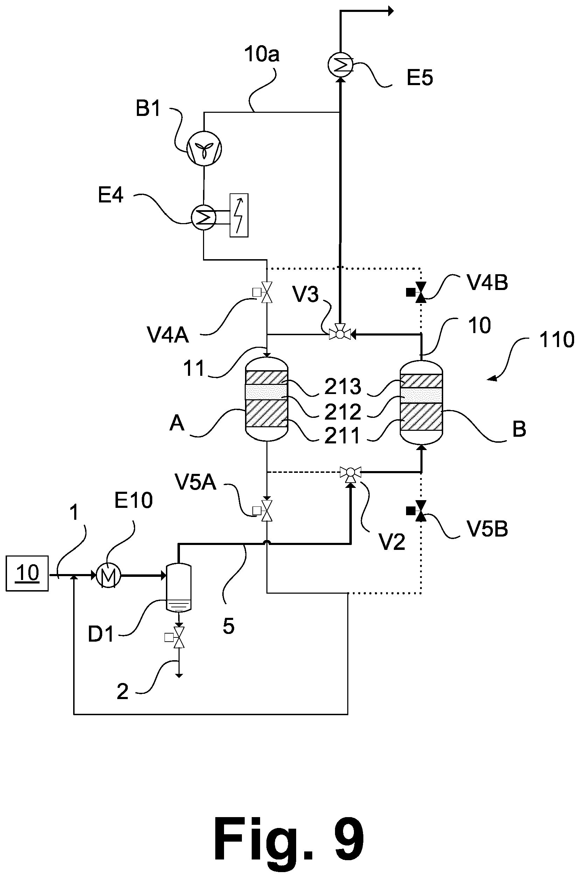

Figure 8 illustrates a method and apparatus for producing hydrogen according to an embodiment as proposed herein and generally referred to with 500, and Figure 9 illustrates a method and apparatus for producing hydrogen according to an embodiment as proposed herein and generally referred to with 600. These embodiments correspond to combinations of the embodiment shown in Figure 7 with the features already discussed in connection with Figures 5 and 6.

Typical parameters of stream 1 upstream of heat exchanger 10, of stream 5 upstream of the adsorption vessel in the adsorption mode, and of stream 10 are indicated in Table 3. A ratio between product flow in Nm³/h vesus m³ catalytic layer 212 is generally in the range of 70000 to 150000 Nm³h⁻¹m⁻³ A temperature distance upstream of the catalytic layer 212 is in a range of 0 to 20K above the dew point. As mentioned, as the regeneration or cooling gas 5a, 5b, 10a, 10b, a proportion of 5 to 60% as compared to the product gas 10 or gas stream 5 may be provided.

**Table 3**

| **Parameter** | **Unit** | **1** | **5** | **10** |
|---|---|---|---|---|
| Pressure | bar (abs.) | 10-40 | 10-40 | 10-40 |
| Temperature | °C | 50-70 | 10-50 | 10-50 |
| Oxygen content | vppm | 50-1000 | 50-1000 | < 5 |
| Water content | vppm | > saturation | saturated | < 50 or < 5 |

## Claims

1. A method (100-600) for producing hydrogen, comprising providing a first gas (1) containing hydrogen, oxygen and water, said providing the first gas (1) comprising an electrolytic conversion of water; providing a second gas (5) containing hydrogen, oxygen and water, said providing the second gas (5) comprising a condensative removal of water from the first gas (1) or a part thereof; and providing a third gas (10) containing hydrogen, said providing the third gas (10) comprising an adsorptive removal of water and a catalytic removal of oxygen from the second gas (5) or a part thereof using a adsorptive and catalytic treatment arrangement (110) comprising treatment vessels (A, B), wherein each of the treatment vessels (A, B) comprises, in a first direction from a first opening to a second opening, a first adsorption layer (211), a catalytic layer (212) and a second adsorption layer (213), wherein each of the treatment vessels (A, B) is alternatingly operated in a treatment mode and a regeneration mode, wherein, in the treatment mode, the second gas (5) or a part thereof is passed in the first direction through the treatment vessels (A, B), wherein, in the treatment mode, the first adsorption layer (211) and the second adsorption layer (213) are used for said adsorptive removal of water and the catalytic layer (212) is used for said catalytic removal of oxygen, wherein, in the regeneration mode, the treatment vessels (A, B) are heated using a heating gas (5a, 10a) which is formed from a part of the second gas (5) or the third gas (10), is heated, and is passed through the treatment vessels (A, B).

2. The method (100-600) according to claim 1, wherein the first adsorption layer (211) has a volume corresponding to 50 to 80 vol-% of a total volume of the first adsorption layer, the catalytic layer and the second adsorption layer, the catalytic layer (212) has a volume corresponding to 5 to 10 vol-% of said volume, and the second adsorption layer (213) has a volume corresponding to 10 to 40 vol-% of said total volume.

3. The method (100-600) according to claim 1 or 2, wherein the heating gas (5a, 10a) is passed through the treatment vessels (A, B) in the first direction or in a second direction opposite to the first direction.

4. The method (100-600) according to any of the preceding claims, wherein the first gas (1) contains hydrogen in a first hydrogen content, water in a first water content, and oxygen in a first oxygen content, the second gas (5) contains hydrogen in a second hydrogen content, water in a second water content, and oxygen in a second oxygen content, and the third gas (10) contains hydrogen in a third hydrogen content.

5. The method (100-600) according to claim 4, wherein the first water content is a water content above a saturation content, wherein the second water content is a water content corresponding to a saturation content, and wherein the third water content is from 0 to 50 or from 0 to 5 parts by million on a volume basis, and/or wherein the first oxygen content is from 50 to 1000 parts by million on a volume basis, wherein the second oxygen content is from 50 to 1000 parts by million on a volume basis, and wherein the third oxygen content is from 0 to 5 parts by million on a volume basis.

6. The method according to any one of the preceding claims, wherein the first gas (1) is provided at an absolute pressure of 10 to 40 bar and at a temperature of 50 to 70 °C, wherein the second gas (5) is provided at an absolute pressure of 10 to 40 bar and at a temperature of 10 to 50 °C, and wherein the third gas (10) is provided at an absolute pressure of 10 to 40 bar and at a temperature of 10 to 70 °C.

7. The method according to any of the preceding claims, wherein the part of the second gas (5) or the third gas (10) from which the heating gas (5a, 10a) is formed is a proportion of 5 to 60% by volume of the second gas (5) or the third gas (10).

8. The method according to any one of the preceding claims, wherein in the regeneration mode, and subsequent to the treatment vessels (A, B) being heated, the treatment vessels (A, B) are cooled using a cooling gas (5a, 10a) which is formed from a part of the second gas (5) or the third gas (10) and is passed through the treatment vessels (A, B).

9. The method according to claim 6, wherein the part of the second gas (5) or the third gas (10) from which the cooling gas (5a, 10a) is formed is a proportion of 5 to 60% by volume of the second gas (5) or the third gas (10).

10. The method according to claim 8 or 9, wherein the cooling gas stream (5b, 10b) is passed through the treatment vessels (A, B) in the first direction or in a second direction opposite to the first direction.

11. The method according to any one of the preceding claims, wherein the first adsorption layer (211) is used for the adsorptive removal of at least a part of the water contained in the second gas (5) upstream of the catalytic layer (212) and the second adsorption layer (213) is used for the adsorptive removal of at least a part of the water formed from oxygen in the catalytic layer (212).

12. The method according to any one of the preceding claims, wherein the regeneration gas (5a, 10a) or a part thereof is subjected to the condensative removal of water to which the first gas (1) or the part thereof is subjected, or to a separate condensative removal of water, and is thereafter returned to the adsorptive removal of water and the catalytic removal of oxygen to which the second gas (5) or the part thereof is subjected.

13. The method according to claim 10, wherein the condensative removal of water to which the first gas (1) or the part thereof is subjected and/or the separate condensative removal of water to which the regeneration gas (5a, 10a) or the part thereof is subjected includes a cooling step and a phase separation.

14. The method according to any one of the preceding claims, wherein the electrolytic conversion of water is performed as, or includes, a low-temperature electrolysis or a high-temperature electrolysis.

15. An apparatus for producing hydrogen, comprising an electrolysis unit (10) configured for providing a first gas (1) containing hydrogen, oxygen and water including an electrolytic conversion of water; a condensation arrangement (E10, D1) configured for providing a second gas (5) containing hydrogen, oxygen and water including a condensative removal of water from the first gas (1) or a part thereof; and an adsorptive and catalytic treatment arrangement (110) comprising treatment vessels (A, B) configured for providing a third gas (10) containing hydrogen including an adsorptive removal of water and a catalytic removal of oxygen from the second gas (5) or a part thereof, wherein each of the treatment vessels (A, B) comprises, in a first direction from a first opening to a second opening, a first adsorption layer (211), a catalytic layer (212) and a second adsorption layer (213), wherein each of the treatment vessels (A, B) is configured to be alternatingly operated in a treatment mode and a regeneration mode, wherein, in the treatment mode, the second gas (5) or a part thereof is passed in the first direction through the treatment vessels (A, B), wherein, in the treatment mode, the first adsorption layer (211) and the second adsorption layer (213) are used for said adsorptive removal of water and the catalytic layer (212) is used for said catalytic removal of oxygen, wherein, in the regeneration mode, the treatment vessels (A, B) are heated using a heating gas (5a, 10a) formed from a part of the second gas (5) or the third gas (10), is heated, and is passed through the treatment vessels (A, B).
